# FASCICULE DE BREVET EUROPEEN

(11) **EP 3 558 794 B1**
(45) Date de publication et mention de la délivrance du brevet: **02.12.2020**
(21) Numéro de dépôt: 17829240.5
(22) Date de dépôt: 18.12.2017
(51) Int. Cl.: B62D 31/02

(54) **CHASSIS POUR HABITACLE D'UN VEHICULE DE TRANSPORT ET PAROI DE CHASSIS**
FAHRGESTELL FÜR DEN FAHRGASTRAUM EINES TRANSPORTFAHRZEUGS UND FAHRGESTELLWAND
CHASSIS FOR TRANSPORT VEHICLE PASSENGER COMPARTMENT AND CHASSIS WALL

(30) Priorité: 22.12.2016 FR 1663143
(43) Date de publication de la demande: 30.10.2019
(73) Titulaire: ALSTOM APTIS, 67980 Hangenbieten (FR)
(72) Inventeur: LAMANNA, Franck, 67520 Marlenheim (FR); ANDRE, Jean-Luc, 67120 Molsheim (FR); NARDIN, Pascal, 67000 Strasbourg (FR); DUMONT, Ludovic, 67230 Westhouse (FR)
(74) Mandataire: Cabinet Nuss
(86) Numéro de dépôt international: PCT/FR2017/053659
(87) Numéro de publication internationale: WO 2018/115686

(56) Documents cités:
- WO-A1-91/18780
- DE-C1- 19 545 591
- FR-A1- 2 706 406
- JP-A- H1 071 963
- US-A- 4 059 303

## Description

La présente invention concerne le domaine des châssis pour habitacle d'un véhicule de transport, en particulier, d'un bus.

Un bus comporte généralement un châssis comprenant un plancher, un cadre auquel est fixé un plafond et des parois de châssis verticales munies d'ouvrants et de parties pleines, qui sont supportées par le plancher et supportent elles-mêmes le cadre. En plus des parois de châssis verticales, des piliers porteurs sont disposés à l'intérieur de l'habitacle, ainsi que des traverses sont prévues en travers de l'ouverture du cadre. Ces piliers et ces traverses sont nécessaires pour garantir que le plafond est solidement soutenu et éviter son fléchissement. Toutefois, ils présentent l'inconvénient de complexifier la fabrication du châssis, d'engendrer une perte d'espace au sein de l'habitacle, de réduire le flux de passagers à bord, d'interdire l'accès aux passagers en fauteuil roulant dans certaines zones du véhicule, et d'être peu esthétiques.

Le document WO 91/18780 A1 décrit un châssis pour habitacle d'un véhicule de transport selon le préambule de la revendication 1.

La présente invention a pour objectif de proposer une solution de châssis dont la résistance mécanique est améliorée et permettant de pallier à au moins une des limitations de l'art antérieur.

L'invention concerne un châssis pour habitacle d'un véhicule de transport, comprenant un cadre rigide de support agencé pour être supporté par une pluralité de montants, le cadre rigide de support étant apte et destiné à être positionné dans la partie supérieure de l'habitacle du véhicule,

le cadre rigide de support comprenant :
un corps de cadre étant au moins en partie contenu dans un plan horizontal,
au moins une structure de renfort latérale s'étendant selon une direction longitudinale le long d'au moins un côté longitudinal du corps de cadre, la structure de renfort présentant une hauteur supérieure à la hauteur du corps de cadre,
le corps de cadre comprenant au moins deux côtés longitudinaux opposés et sensiblement parallèles entre eux,
la structure de renfort comprenant au moins deux longerons disposés selon des directions parallèles et s'étendant selon une direction longitudinale le long des deux côtés longitudinaux du corps de cadre,
le corps de cadre formant au moins une ouverture centrale contenue dans le plan horizontal fermée par au moins un élément de plafond formant un plafond,
châssis caractérisé en ce que les deux longerons sont en partie saillants par rapport au plafond, et en ce que les longerons et le plafond délimitent un logement ouvert en partie supérieure.

L'invention sera mieux comprise, grâce à la description ci-après, qui se rapporte à plusieurs modes de réalisations préférés, donnés à titre d'exemples non limitatifs, et expliqués avec référence aux dessins schématiques annexés, dans lesquels :
la figure 1 représente une vue en perspective d'un châssis selon l'invention,
la figure 2 représente une vue de côté du châssis représenté à la figure 1,
la figure 3 représente une vue de face du châssis représenté à la figure 1,
la figure 4 représente une vue en perspective du cadre rigide de support du châssis selon l'invention,
la figure 5 est une vue de côté du cadre rigide de support représenté à la figure 4,
la figure 6 est une vue en coupe transversale du cadre rigide de support représenté à la figure 4,
la figure 7 est vue en coupe transversale du cadre rigide de support représenté à la figure 6 dépourvu d'élément de plafond,
la figure 8 est vue de face du cadre rigide de support représenté à la figure 4,
la figure 9 est vue en coupe longitudinale du cadre rigide de support représenté à la figure 4,
la figure 10A est une vue en perspective de la première pièce allongée du profilé, et
la figure 10B est une vue en coupe de la première pièce allongée représentée à la figure 10A,
la figure 11A est une vue en perspective d'un longeron solidaire d'un profilé d'un côté longitudinal d'un corps de cadre selon une variante alternative de l'invention,
la figure 11B est une vue en perspective du longeron de la figure 11A,
la figure 11C est une vue en perspective du profilé de la figure 11A,
la figure 12A est une vue en coupe transversale du longeron solidaire du profilé du côté longitudinal du corps de cadre de la figure 11A,
la figure 12B est une vue en coupe transversale du longeron de la figure 11A,
la figure 12C est une vue en coupe transversale du profilé de la figure 11A.

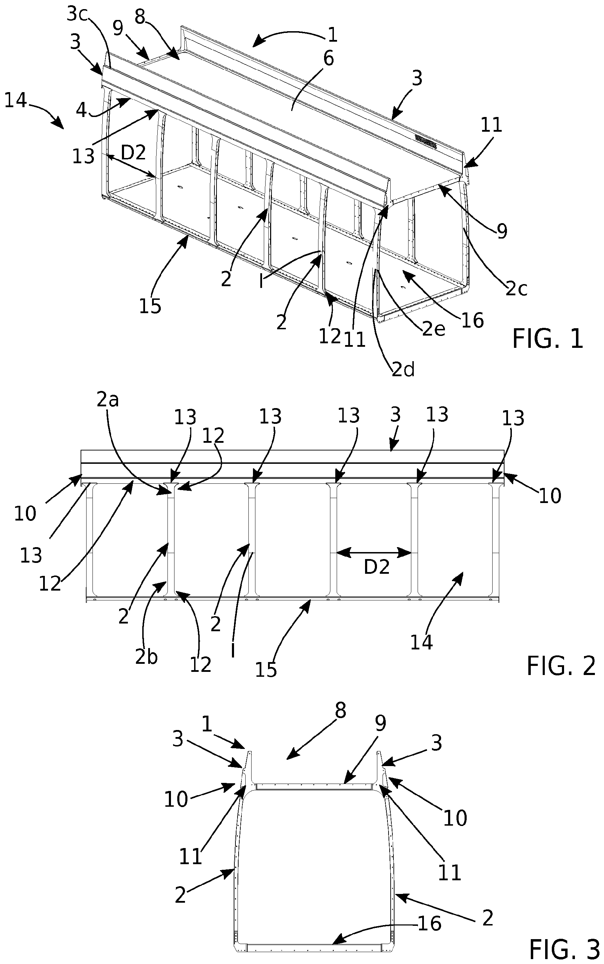

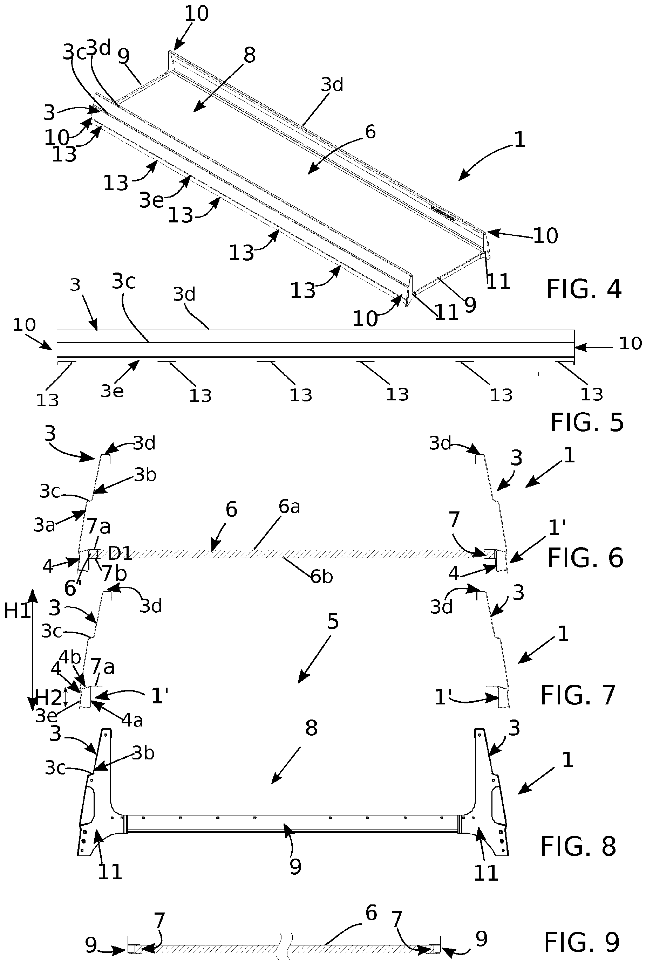

Le châssis pour habitacle d'un véhicule de transport, comprend un cadre rigide de support 1 (figure 4) agencé pour être supporté par une pluralité de montants 2 (figures 1 à 3). Ce cadre rigide de support 1 est apte et destiné à être positionné dans la partie supérieure de l'habitacle du véhicule (figures 1 à 3).

On entend par montant un élément allongé porteur, c'est-à-dire apte et destiné à porter une ou plusieurs charge(s).

Préférentiellement, le véhicule de transport peut être, par exemple, un bus.

De préférence, le cadre rigide de support 1 peut former une partie d'un toit de véhicule.

Conformément à l'invention, le châssis est caractérisé en ce que le cadre rigide de support 1 comprend :
un corps de cadre 1' étant au moins en partie contenu dans un plan horizontal (figures 6 et 7),
au moins une structure de renfort 3 latérale s'étendant selon une direction longitudinale le long d'au moins un côté longitudinal 4 du corps de cadre 1', la structure de renfort 3 présentant une hauteur H1 supérieure à la hauteur H2 du corps de cadre 1' (figures 6 et 7).

Avantageusement, cette configuration confère au cadre rigide de support 1 une résistance mécanique améliorée. En effet, l'ajout de la structure de renfort latérale 3 au corps de cadre 1' permet de rigidifier le cadre rigide de support 1 pour le rendre porteur, c'est-à-dire apte et destiné à porter une ou plusieurs charge(s). Par ailleurs, du fait de la différence des hauteurs H1, H2, la structure de renfort 3 est saillante par rapport au plan horizontal dans lequel est contenu au moins en partie le corps de cadre 1'.

Le corps de cadre 1' peut comprendre au moins deux côtés longitudinaux 4 opposés et sensiblement parallèles entre eux et la structure de renfort peut comprendre au moins deux longerons 3 disposés selon des directions parallèles et s'étendant selon une direction longitudinale le long des deux côtés longitudinaux 4 du corps de cadre 1'.

Avantageusement, selon cette configuration le cadre rigide de support 1 est rigidifié latéralement grâce aux longerons 3.

De préférence, chaque côté longitudinal 4 du corps de cadre 1' peut être réalisé par un profilé pouvant être rapporté (figures 6, 7, 11A, 11B, 12A et 12C) ou directement intégré au longeron 3.

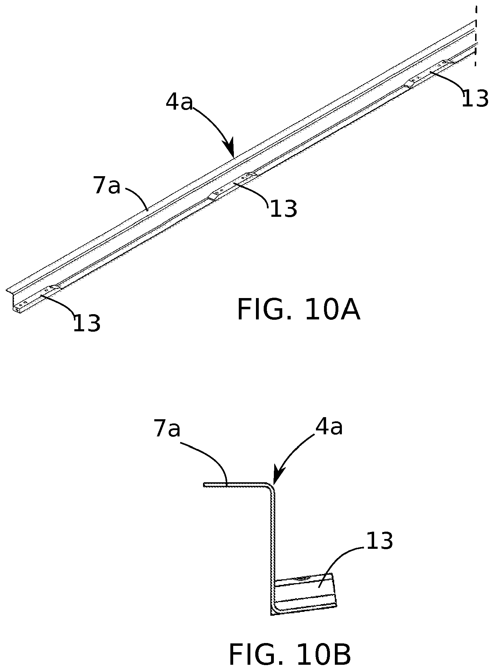

Dans l'exemple illustré aux figures 1 à 10B, le profilé 4 est formé de plusieurs pièces, une première pièce allongée 4a pouvant présenter une section sensiblement en S inversé (figures 10A et 10B) et une deuxième pièce allongée 4b sous la forme d'une plaque. Comme l'illustrent les figures 6 et 7, la deuxième pièce allongée 4b peut être inclinée ce qui permet avantageusement de faciliter l'évacuation des eaux de pluie.

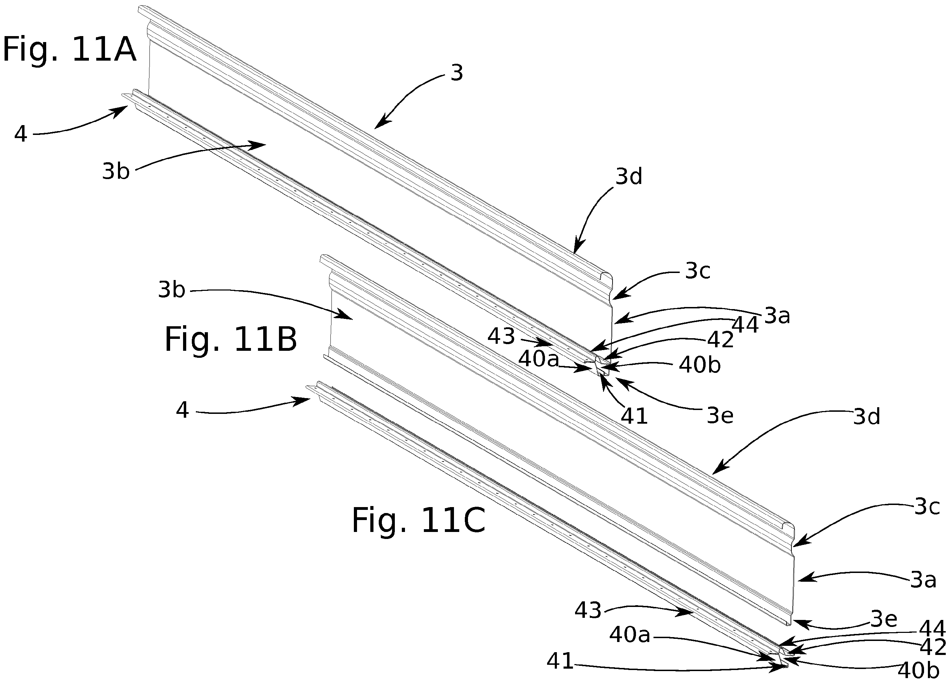

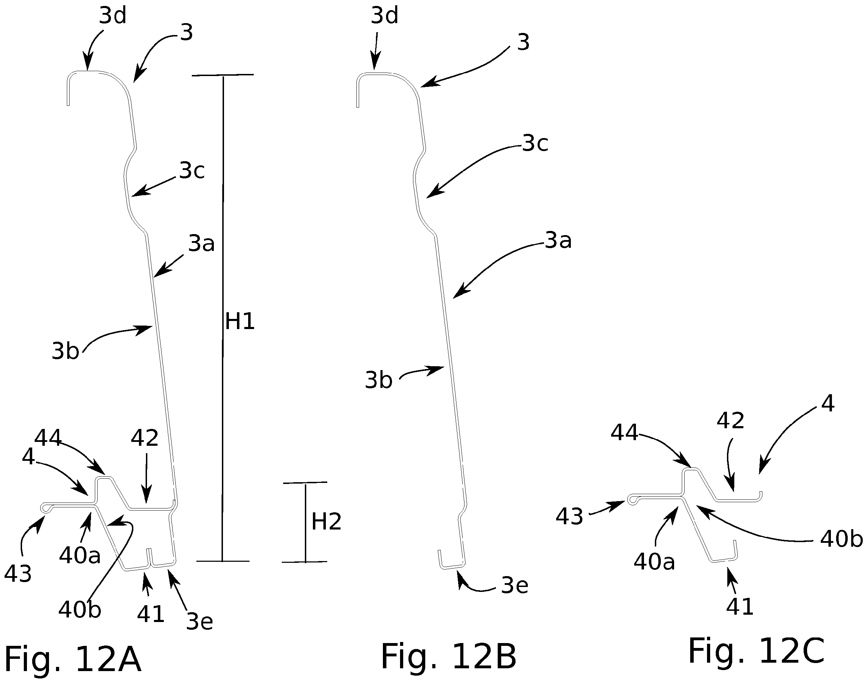

Dans l'exemple illustré aux figures 11A, 11C, 12A et 12C, le profilé 4 est formé d'une unique pièce allongée. Le profilé 4 présente une paroi interne 40a de laquelle une portion repliée 43 sur elle-même est saillante et une paroi externe 40b comprenant deux extrémités saillantes 41, 42 de celle-ci. La portion repliée 43 est destinée à porter le bord périphérique 6' d'un élément de plafond 6 sous forme de plaque décrit ci-après. Les deux extrémités saillantes 41, 42 sont sensiblement parallèles entre elles et peuvent présenter une section en forme de U et sont destinées à être fixées au longeron 3, préférentiellement au niveau de son extrémité inférieure 3e décrit ci-après. Cette fixation se fait préférentiellement par soudure. Une butée 44 peut être présente entre la portion repliée 43 et l'extrémité saillante 42 supérieure. Le bord périphérique 6' d'un élément de plafond 6 peut avantageusement venir en appui contre cette butée 44.

De préférence, la longueur du longeron 3 et la longueur du profilé 4 sont sensiblement égales. En outre, la hauteur du longeron H1 est supérieure à la hauteur du profilé H2.

Préférentiellement, le corps de cadre 1' peut présenter une allure sensiblement rectangulaire et les côtés longitudinaux 4 correspondent alors aux longueurs d'un rectangle.

Tel que représenté aux figures, le longeron 3 peut comprendre un corps allongé qui peut être réalisé par une tôle mince pliée ou galetée. Avantageusement, un tel longeron 3 présente l'avantage de présenter un bon compromis entre rigidité et légèreté.

Le longeron 3 peut comprendre une première face et une seconde face 3a, 3b. Le contour du longeron 3 peut être sensiblement inscrit dans un rectangle (figure 5 et 11A).

Le longeron 3 peut également comprendre un rebord de rigidification 3c qui s'étend dans une direction longitudinale du longeron 3 (figures 4 à 8 et 11A, 11B, 12A et 12B).

Ce rebord de rigidification 3c permet avantageusement d'améliorer la résistance à la torsion et à la flexion du longeron 3 et d'empêcher des ondulations vibratoires du longeron 3.

Comme l'illustrent les figures 4 à 8, préférentiellement, le rebord de rigidification 3c peut être situé dans une partie sensiblement médiane de la première face et de la seconde face 3a, 3b. Du côté de la première face 3a, le rebord de rigidification 3c peut présenter la forme d'un épaulement. La seconde face 3b peut comprendre le long de son extrémité inférieure 3e le profilé rapporté qui réalise le côté longitudinal 4 du corps de cadre 1'.

Comme l'illustrent les figures 11A, 11B, 12A et 12B, préférentiellement du côté de la première face 3a, le rebord de rigidification 3c peut se présenter sous la forme d'une portion concave qui s'étend préférentiellement, dans une direction longitudinale du longeron 3. La seconde face 3b peut comprendre le long de son extrémité inférieure 3e le profilé rapporté qui réalise le côté longitudinal 4 du corps de cadre 1'.

Comme l'illustrent les figures 6, 7, 8, 11A, 11B, 12A et 12B, en outre, une extrémité supérieure 3d du longeron 3 peut présenter une partie recourbée du côté de la seconde face 3b. Préférentiellement, l'extrémité supérieure 3d peut présenter une section en forme de U. Avantageusement, cette extrémité supérieure 3d permet de participer à la rigidité du longeron 3.

Comme l'illustrent les figures 11A, 11B, 12A et 12B, en outre, une extrémité inférieure 3e du longeron 3 peut présenter une partie recourbée du côté de la seconde face 3b. Préférentiellement, l'extrémité inférieure 3e peut présenter une section en forme de U. Avantageusement, cette extrémité inférieure 3e permet de participer à la rigidité du longeron 3.

Le longeron 3 peut de préférence être réalisé en acier, par exemple en acier S355.

En outre, le longeron 3 peut être monobloc, c'est-à-dire en une seule pièce, pour éviter les ruptures d'inertie et les concentrations de contraintes.

De manière alternative et selon une variante non représentée, le longeron 3 peut présenter la forme d'une poutrelle en I à profil normal dont l'abréviation est IPN. Toutefois, un longeron 3 en tôle tel que décrit précédemment est préféré en raison de sa légèreté relativement à la masse d'une poutrelle en I à profil normal qui est plus élevée.

Le corps de cadre 1' peut former au moins une ouverture centrale 5 (figure 7) contenue dans le plan horizontal fermée par au moins un élément de plafond 6 formant un plafond (figures 1, 4, 6, 7, 9).

Avantageusement, le cadre rigide de support 1 permet de par sa résistance améliorée de porter un plafond sans nécessiter l'ajout de traverses au travers de l'ouverture centrale 5. En outre, ce plafond peut également être porteur et peut supporter au niveau de sa surface supérieure 6a et/ou de sa surface inférieure 6b une ou plusieurs charge(s) (non représentées). La charge peut être un équipement technique (non représenté) tel que, à titre d'exemples non limitatifs : un moteur, une alimentation électrique, une climatisation, un générateur thermique, un module de traitement de l'air. La charge peut également être une réserve d'énergie embarquée ou un système permettant de générer de l'énergie, tel que par exemple, un système de batterie ou une pile à combustible. Le cadre rigide de support 1 selon l'invention peut ainsi avantageusement supporter une ou plusieurs charge(s) dont la masse peut, par exemple, aller jusqu'à plusieurs de tonnes.

Dans ce cas, le corps de cadre 1' peut comprendre des moyens de fixation 7 des éléments de plafond 6 qui sont orientés vers l'ouverture centrale 5.

Préférentiellement, les moyens de fixation peuvent comprendre au moins une gorge périphérique 7 (figure 6). Cette gorge périphérique 7 permet avantageusement de recevoir le bord périphérique 6' d'un élément de plafond 6 sous forme de plaque. La gorge périphérique 7 peut présenter une section en forme de U. Comme l'illustre la figure 6, de chaque côté longitudinal 4 du corps de cadre 1' peut s'étendre cette gorge périphérique 7. La gorge périphérique 7 peut être réalisée par deux cornières 7a, 7b disposées à une distance D1 l'une de l'autre pour recevoir le bord périphérique 6', parallèles entre elles et fixées à chaque côté longitudinal 4 du corps de cadre 1'. Dans l'exemple illustré, la cornière 7a et formée par une partie de la première pièce 4a du profilé 4 (figures 6, 10A et 10B). Préférentiellement, pour fixer un élément de plafond 6, l'ensemble du cadre rigide de support 1, représenté à la figure 6, est placé sur l'envers, puis un élément de plafond 6 est positionné sur la cornière 7a et est collé. De manière alternative l'assemblage peut également être opéré par rivetage, vissage ou analogue. Consécutivement à ces étapes, la cornière 7b est fixée mécaniquement au profilé 4, au niveau de la première pièce 4a de sorte à être en appui sur le bord 6' de l'élément de plafond 6 et à être superposée à la cornière 7a. De manière alternative, à la place de la gorge périphérique 7, il est possible de ne prévoir qu'une seule cornière 7a et dans ce cas l'élément de plafond 6 peut être disposé sur la seule cornière 7a et y être assemblé mécaniquement.

Dans tous les cas la partie saillante des cornières 7a, 7b présente préférentiellement une longueur suffisante pour supporter l'élément de plafond 6. Cette longueur dépend essentiellement de la matière de la cornière 7a, 7b et de la masse à supporter. Pour réduire la longueur de cette partie saillante, il est possible de prévoir un contreventement.

L'élément de plafond 6 peut comprendre une plaque ou analogue, préférentiellement composite et/ou multicouches. A titre d'exemple non limitatif, la plaque de l'élément de plafond 6 peut comprendre une première couche en aluminium sous la forme de plaque pleine, une deuxième couche en aluminium en forme de nid d'abeille, une troisième couche en aluminium sous la forme de plaque pleine. Dans ce cas, les première, deuxième et troisième couches peuvent être superposées successivement.

Dans le cas où le corps de cadre 1' présente une allure sensiblement rectangulaire, alors l'ouverture centrale 5 peut présenter une forme sensiblement rectangulaire et l'élément de plafond 6 peut présenter une forme sensiblement rectangulaire (figures 1 et 4).

Bien entendu le plafond peut de manière alternative comprendre une pluralité d'éléments de plafond 6 sous la forme de plaque ou analogue.

Les deux longerons 3 peuvent être en partie saillants par rapport au plafond, et les longerons 3 et le plafond peuvent délimiter un logement 8 ouvert en partie supérieure (figures 1, 3, 4, 6).

Avantageusement, le logement 8 permet de contenir les charges précitées et de les maintenir latéralement grâce aux longerons 3.

Les deux longerons 3, le corps de cadre 1' et le plafond peuvent présenter une section en forme de U ou en forme de H (figures 4 et 6).

Le corps de cadre 1' peut comprendre au moins une entretoise 9 disposés entre les deux longerons 3.

Dans ce cas, une entretoise 9 peut être fixée aux longerons 3 par l'intermédiaire d'un organe de fixation rigide 11.

Cet organe de fixation rigide 11 peut être une tôle dont le contour correspond au moins en partie au profil de la seconde face 3b du longeron 3 (figure 8). Avantageusement, la seconde face 3b repose ainsi contre une partie du contour de l'organe de fixation rigide 11.

Préférentiellement, l'entretoise 9 peut être fixée aux extrémités 10 du longeron 3 qui sont en regard l'une de l'autre par l'intermédiaire de cet organe de fixation rigide 11.

La gorge périphérique 7 peut également s'étendre le long de chaque entretoise 9 (figure 9).

Selon une variante de réalisation de l'invention, le corps de cadre 1' peut être formé par un cadre monobloc, c'est-à-dire fait d'une seule pièce.

Selon une autre variante de réalisation de l'invention, le cadre rigide de support 1 selon l'invention peut être monobloc, c'est-à-dire fait d'une seule pièce.

La structure de renfort 3 peut être apte et destinée à être disposée dans le prolongement de la direction des montants 2 (figures 1 à 3). La direction longitudinale des montants 2 et la direction longitudinale de la structure de renfort 3 peuvent de préférence être sécantes et plus particulièrement orthogonales.

A cet effet, le corps de cadre 1' peut comprendre une pluralité de zones d'assemblage 13 d'un montant 2.

Plus particulièrement, une partie inférieure du S inversé de la première pièce 4a peut comprendre une pluralité de retraits 13, formant une pluralité de zones d'assemblage, dont la forme est complémentaire de la forme d'une première extrémité 2a d'un montant 2 décrit ci-après. Préférentiellement, l'assemblage de la première extrémité 2a avec un retrait 13 est réalisé par assemblage mécanique (figures 10A et 10B).

Comme l'illustrent les figures 1 à 3, le châssis selon l'invention comprend le cadre rigide de support 1 tel que décrit précédemment et peut comprendre, en outre, un plancher 16 et une pluralité de montants 2 disposés transversalement entre le plancher 16 et la cadre de support rigide 1. Il en résulte que les montants 2 peuvent supporter le cadre rigide de support 1. Préférentiellement, le plancher 16 et le plafond peuvent être parallèles entre eux. Les montants 2 peuvent être sensiblement parallèles entre eux et répartis uniquement à la périphérie du plancher 16. Deux montants 2 adjacents peuvent être positionnés à une distance D2 l'un de l'autre pour former une ouverture 14. Avantageusement, de telles ouvertures 14 permettent de recevoir en tout ou partie des éléments vitrés (non représentées) et/ou des portes (non représentées) et/ou des plaques préférentiellement en tôle ou tous types d'ouvrants. Avantageusement, cette répartition des montants 2 permet le cas échéant d'éviter que les longerons 3 ne fléchissent. Toutefois, les longerons 3 peuvent être autoportants, dans ce cas les montants 2 ne sont pas nécessaires pour éviter que les longerons 3 fléchissent.

Par ailleurs, chaque montant 2 peut comprendre une première extrémité 2a qui est assemblée au corps de cadre 1'. L'assemblage peut être réalisé par soudure, collage, par assemblage mécanique ou tout autre moyen de fixation. De même, chaque montant 2 peut comprendre une seconde extrémité 2b opposée à la première extrémité et qui est assemblée à un profilé 15 disposé à la périphérie du plancher 16. L'assemblage peut être réalisé par soudure, collage ou tout autre moyen de fixation.

Avantageusement, un tel châssis selon l'invention permet de proposer un habitacle de véhicule de transport dépourvu de montants 2 porteurs à l'intérieur de l'habitacle comme l'illustre la figure 1. En effet, les efforts verticaux sont uniquement répartis sur les montants 2. En outre, ce châssis permet de proposer un plancher 16 essentiellement plan puisque tous les équipements techniques peuvent être supportés par le plafond positionné au niveau du cadre rigide de support 1.

Le cadre rigide de support 1 selon l'invention peut être un élément assemblé comme l'illustre la figure 4 et former un ensemble autonome. Dans ce cas, le cadre rigide de support 1 assemblé est tel que représenté à la figure 4, et peut être assemblé ultérieurement aux montants 2.

La première extrémité 2a et/ou la seconde extrémité 2b des montants 2 peuvent intégrer au moins un organe de contreventement 12. De manière alternative, l'organe de contreventement 12 peut être rapporté.

Lors d'une phase d'accélération, ou de décélération du véhicule, c'est-à-dire une phase de variation de la vitesse du véhicule en fonction du temps, les montants 2 ont tendance à subir une contrainte de compression et une contrainte de cisaillement et/ ou de torsion, du fait de la masse appliquée sur les montants 2 par l'intermédiaire des longerons 3, ayant pour conséquence de déformer les montants 2, par exemple de les fléchir. Les organes de contreventement 12 permettent avantageusement de contrer cette tendance à la déformation des montants 2. Il en résulte que le châssis obtenu présente une résistance mécanique à la fois statique et dynamique qui est stable. L'intégration de ces organes de contreventement 12 permet avantageusement de faciliter l'assemblage des montants 2 aux autres éléments du châssis tels que les longerons 3 ou les profilés 15 du plancher 16. Par ailleurs, la forme de l'organe de contreventement 12 dépend pour la plus grande part de la masse des éléments supportés par les montants 2, mais également de la hauteur totale du véhicule.

Comme l'illustrent les figures 1 à 3 pour un même montant 2, la première extrémité 2a et la seconde extrémité 2b peuvent intégrer chacune deux organes de contreventement 12 identiques et qui sont par conséquent symétriques.

Toutefois, les organes de contreventement 12 de part et d'autre de la première extrémité 2a ou de la seconde extrémité 2b ne doivent pas nécessairement être identiques et pourraient présenter des formes différentes et donc être dissymétriques. Ceci est particulièrement avantageux, car en règle générale, la valeur de la variation de la vitesse en fonction du temps est moins élevée durant une phase d'accélération que durant une phase de décélération. Par exemple, la valeur de la variation de la vitesse en fonction du temps peut valoir 2 m/s² lors d'une phase d'accélération du véhicule, tandis qu'elle peut valoir 5 m/s² lors d'une phase de freinage et plus lors d'une phase de freinage d'urgence.

Au moins la première extrémité 2a et/ou au moins la seconde extrémité 2b peuvent présenter au moins une portion évasée par rapport à la forme du montant 2 située entre la première extrémité 2a et/ou la seconde extrémité 2b, la portion évasée réalisant au moins en partie l'organe de contreventement 12.

La portion évasée peut présenter une forme courbée dont le rayon de courbure peut être préférentiellement au moins supérieur à 50 millimètres.

Selon un mode de réalisation optimal, le rayon de courbure peut être compris entre 80 et 150 millimètres. Idéalement, le rayon de courbure vaut 100 millimètres.

L'ajustement du rayon de courbure permet de réduire ou non la quantité de matière de l'organe de contreventement et par conséquent d'augmenter ou de réduire la taille de l'ouverture 14.

Le montant 2 peut présenter une portion de section constante comprise entre la première extrémité 2a et/ou la seconde extrémité 2b, et la première extrémité 2a et/ou la seconde extrémité 2b peuvent présenter une section supérieure à la section constante.

La portion de section constante peut présenter une forme d'allure rectangulaire dont les longueurs se prolongent.

Le montant 2 peut être creux. Avantageusement, un tel montant 2 présente un bon compromis entre résistance et légèreté.

Le montant 2 peut comprendre une première portion rectiligne qui s'étend de la seconde extrémité 2b jusqu'à une zone d'intersection I et une seconde portion courbée qui s'étend de la zone d'intersection I jusqu'à la première extrémité 2a.

Avantageusement, ce montant 2 cintré à la première extrémité 2a permet d'améliorer l'aérodynamisme du véhicule, notamment au niveau de la partie supérieure du véhicule. Il en résulte une réduction de la consommation d'énergie du véhicule. En outre, ce montant 2 contribue également à renforcer la résistance du châssis et particulièrement la partie supérieure du châssis en formant une voûte. Le montant 2 peut être réalisé en une première partie longitudinale 2c et une seconde partie longitudinale 2d disposées en vis-à-vis par au moins une de leurs faces latérales et fixées entres elles.

La première partie longitudinale 2c est destinée à être à l'intérieur de l'habitacle du véhicule et la seconde partie longitudinale 2d est destinée à être à l'extérieur de l'habitacle du véhicule.

La première partie longitudinale 2c peut comprendre des moyens de fixation d'un élément de l'habitacle (non représenté), tel qu'un équipement ou un groupe d'équipement, par exemple un siège.

Lorsqu'un équipement est fixé à un montant 2, par exemple, en porte à faux, le montant 2 selon l'invention présente l'avantage de ne pas subir de torsion du fait de la présence des organes de contreventement 12 et de la configuration en deux parties longitudinales 2c, 2d.

La première partie longitudinale 2c et la seconde partie longitudinale 2d sont fixées entre elles par deux plaques 2e allongées formant deux entretoises. Préférentiellement, l'assemblage est réalisé par soudure ou analogue. Dans ce cas, la première partie longitudinale 2c et la seconde partie longitudinale 2d peuvent présenter chacune une section linéaire.

Conformément à une variante de réalisation non représentée de l'invention, la première partie longitudinale 2c et la seconde partie longitudinale 2d peuvent présenter une section en forme de U.

Dans ce cas, la partie longitudinale 2c et la seconde partie longitudinale 2d peuvent de préférence être obtenues par emboutissage d'une tôle.

Dans cette variante de réalisation, la partie longitudinale 2c et la seconde partie longitudinale 2d peuvent de préférence être soudées entre elles, préférentiellement par soudage par points.

De tels montants 2 selon cette variante de réalisation sont aisés à fabriquer et présentent l'avantage de réduire le temps de fabrication du montant 1.

La première extrémité 2a et/ou la seconde extrémité 2b peuvent être fermées au moyen d'une plaque (non représentée). La plaque peut présenter des orifices pour permettre l'assemblage mécanique du montant 2, par exemple avec un longeron 3 et/ou un profilé 15. La plaque peut également être munie d'un orifice d'évacuation des eaux de pluie (non représenté).

La présente invention s'étend bien entendu à un véhicule de transport, en particulier un bus, comprenant le châssis selon l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Châssis pour habitacle d'un véhicule de transport, comprenant un cadre rigide de support (1) agencé pour être supporté par une pluralité de montants (2), le cadre rigide de support (1) étant apte et destiné à être positionné dans la partie supérieure de l'habitacle du véhicule,
le cadre rigide de support (1) comprenant :
un corps de cadre (1') au moins en partie contenu dans un plan horizontal,
au moins une structure de renfort (3) latérale s'étendant selon une direction longitudinale le long d'au moins un côté longitudinal (4) du corps de cadre (1'), la structure de renfort (3) présentant une hauteur (Hl) supérieure à la hauteur (H2) du corps de cadre (1'),
le corps de cadre (1') comprenant au moins deux côtés longitudinaux (4) opposés et sensiblement parallèles entre eux,
la structure de renfort comprenant au moins deux longerons (3) disposés selon des directions parallèles et s'étendant selon une direction longitudinale le long des deux côtés longitudinaux (4) du corps de cadre (1'),
le corps de cadre (1') formant au moins une ouverture centrale (5) contenue dans le plan horizontal fermée par au moins un élément de plafond (6) formant un plafond,
châssis **caractérisé en ce que** les deux longerons (3) sont en partie saillants par rapport au plafond, et
**en ce que** les longerons (3) et le plafond délimitent un logement (8) ouvert en partie supérieure.

2. Châssis selon la revendication 1, **caractérisé en ce que** le corps de cadre (1') comprend des moyens de fixation (7) des éléments de plafond (6) qui sont orientés vers l'ouverture centrale (5).

3. Châssis selon l'une quelconque des revendications 1 à 2, **caractérisé en ce que** l'élément de plafond (6) comprend une plaque.

4. Châssis selon l'une quelconque des revendications 1 à 3, **caractérisé en ce que** les deux longerons (3), le corps de cadre (1') et le plafond présentent une section en forme de U ou en forme de H.

5. Châssis selon l'une quelconque des revendications 1 à 3, **caractérisé en ce que** le corps de cadre (1') comprend au moins une entretoise (9) disposées entre les deux longerons (3).

6. Châssis selon la revendication 5, **caractérisé en ce que** chaque entretoise (9) est fixée aux extrémités (10) des longerons (3) par l'intermédiaire d'un organe de fixation rigide (11).

7. Châssis selon l'une quelconque des revendications 1 à 6, **caractérisé en ce que** la structure de renfort (3) est apte et destinée à être disposée dans le prolongement de la direction des montants (2).

8. Châssis selon l'une quelconque des revendications 1 à 7, **caractérisé en ce que** le corps de cadre (1') comprend un une pluralité de zones d'assemblage (13) d'un montant (2).

9. Châssis selon l'une quelconque des revendications 1 à 8, **caractérisé en ce que** le longeron (3) comprend un rebord de rigidification (3c) qui s'étend dans une direction longitudinale du longeron (3).

10. Châssis selon la revendication 9, **caractérisé en ce que** le longeron (3) comprend une première face (3a) et une seconde face (3b) et **en ce que** du côté de la première face (3a) le rebord de rigidification (3c) se présente sous la forme d'un épaulement.

11. Châssis selon la revendication 9, **caractérisé en ce que** le longeron (3) comprend une première face (3a) et une seconde face (3b) et **en ce que** du côté de la première face (3a) le rebord de rigidification (3c) se présente sous la forme d'une portion concave.

12. Châssis selon l'une quelconque des revendications 1 à 9, **caractérisé en ce que** le cadre rigide de support (1) est monobloc.

## Patentansprüche

1. Fahrgestell für den Fahrgastraum eines Transportfahrzeugs, das einen steifen Tragrahmen (1) enthält, der eingerichtet ist, um von einer Vielzahl von Säulen (2) getragen zu werden, wobei der steife Tragrahmen (1) geeignet und dazu bestimmt ist, im oberen Teil des Fahrgastraums des Fahrzeugs positioniert zu werden, wobei der steife Tragrahmen (1) enthält:
einen Rahmenkörper (1'), der zumindest teilweise in einer waagrechten Ebene enthalten ist,
mindestens eine seitliche Verstärkungsstruktur (3), die sich gemäß einer Längsrichtung entlang mindestens einer Längsseite (4) des Rahmenkörpers (1') erstreckt, wobei die Verstärkungsstruktur (3) eine größere Höhe (H1) als die Höhe (H2) des Rahmenkörpers (1') aufweist,
wobei der Rahmenkörper (1') mindestens zwei gegenüberliegende und im Wesentlichen zueinander parallele Längsseiten (4) enthält,
wobei die Verstärkungsstruktur mindestens zwei Längsträger (3) enthält, die gemäß parallelen Richtungen angeordnet sind und sich in einer Längsrichtung entlang der zwei Längsseiten (4) des Rahmenkörpers (1') erstrecken,
wobei der Rahmenkörper (1') mindestens eine in der waagrechten Ebene enthaltene zentrale Öffnung (5) formt, die von mindestens einem eine Decke bildenden Deckenelement (6) verschlossen wird,
wobei das Fahrgestell **dadurch gekennzeichnet ist, dass** die zwei Längsträger (3) zum Teil bezüglich der Decke vorstehen, und
dass die Längsträger (3) und die Decke eine im oberen Bereich offene Aufnahme (8) begrenzen.

2. Fahrgestell nach Anspruch 1, **dadurch gekennzeichnet, dass** der Rahmenkörper (1') Befestigungseinrichtungen (7) der Deckenelemente (6) enthält, die zur zentralen Öffnung (5) ausgerichtet sind.

3. Fahrgestell nach einem der Ansprüche 1 bis 2, **dadurch gekennzeichnet, dass** das Deckenelement (6) eine Platte enthält.

4. Fahrgestell nach einem der Ansprüche 1 bis 3, **dadurch gekennzeichnet, dass** die zwei Längsträger (3), der Rahmenkörper (1') und die Decke einen U-förmigen oder H-förmigen Querschnitt aufweisen.

5. Fahrgestell nach einem der Ansprüche 1 bis 3, **dadurch gekennzeichnet, dass** der Rahmenkörper (1') mindestens einen Abstandshalter (9) enthält, der zwischen den zwei Längsträgern (3) angeordnet ist.

6. Fahrgestell nach Anspruch 5, **dadurch gekennzeichnet, dass** jeder Abstandshalter (9) an den Enden (10) der Längsträger (3) mittels eines steifen Befestigungsorgans (11) befestigt ist.

7. Fahrgestell nach einem der Ansprüche 1 bis 6, **dadurch gekennzeichnet, dass** die Verstärkungsstruktur (3) geeignet und dazu bestimmt ist, in der Verlängerung der Richtung der Säulen (2) angeordnet zu werden.

8. Fahrgestell nach einem der Ansprüche 1 bis 7, **dadurch gekennzeichnet, dass** der Rahmenkörper (1') eine Vielzahl von Montagezonen (13) einer Säule (2) enthält.

9. Fahrgestell nach einem der Ansprüche 1 bis 8, **dadurch gekennzeichnet, dass** der Längsträger (3) eine Versteifungsrandleiste (3c) enthält, die sich in einer Längsrichtung des Längsträgers (3) erstreckt.

10. Fahrgestell nach Anspruch 9, **dadurch gekennzeichnet, dass** der Längsträger (3) eine erste Seite (3a) und eine zweite Seite (3b) enthält, und dass auf der Seite der ersten Seite (3a) die Versteifungsrandleiste (3c) in Form einer Schulter vorliegt.

11. Fahrgestell nach Anspruch 9, **dadurch gekennzeichnet, dass** der Längsträger (3) eine erste Seite (3a) und eine zweite Seite (3b) enthält, und dass auf der Seite der ersten Seite (3a) die Versteifungsrandleiste (3c) in Form eines konkaven Abschnitts vorliegt.

12. Fahrgestell nach einem der Ansprüche 1 bis 9, **dadurch gekennzeichnet, dass** der steife Tragrahmen (1) einstückig ist.

## Claims

1. Chassis for a passenger compartment of a transport vehicle, comprising a rigid support frame (1) arranged to be supported by a plurality of uprights (2), the rigid support frame (1) being suitable and intended to be positioned in the upper part of the passenger compartment of the vehicle, - the rigid support frame (1) comprising: - a frame body (1') at least partly contained in a horizontal plane, - at least one lateral reinforcing structure (3) extending in a longitudinal direction along at least one longitudinal side (4) of the frame body (1'), the reinforcing structure (3) having a height (H1) that is greater than the height (H2) of the frame body (1'), - the frame body (1') comprising at least two longitudinal sides (4) that are opposite and essentially parallel to one another, - the reinforcing structure comprising at least two stringers (3) arranged in parallel directions and extending in a longitudinal direction along the two longitudinal sides (4) of the frame body (1'), - the frame body (1') forming at least one central opening (5) contained in the horizontal plane and closed by at least one roof element (6) forming a roof, - the chassis being **characterized in that** the two stringers (3) project in part with respect to the roof, and - in that the stringers (3) and the roof define a recess (8) that is open at the top.

2. Chassis according to Claim 1, **characterized in that** the frame body (1') comprises fastening means (7) or the roof elements (6) which are oriented towards the central opening (5).

3. Chassis according to either one of Claims 1 and 2, **characterized in that** the roof element (6) comprises a plate.

4. Chassis according to any one of Claims 1 to 3, **characterized in that** the two stringers (3), the frame body (1') and the roof have a U-shaped or an H-shaped cross section.

5. Chassis according to any one of Claims 1 to 3, **characterized in that** the frame body (1') comprises at least one spacer (9) arranged between the two stringers (3).

6. Chassis according to Claim 5, **characterized in that** each spacer (9) is fastened to the ends (10) of the stringers (3) by means of a rigid fastening member (11) .

7. Chassis according to any one of Claims 1 to 6, **characterized in that** the reinforcing structure (3) is suitable and intended to be arranged in the extension of the direction of the uprights (2).

8. Chassis according to any one of Claims 1 to 7, **characterized in that** the frame body (1') comprises a plurality of mounting zones (13) for an upright (2) .

9. Chassis according to any one of Claims 1 to 8, **characterized in that** the stringer (3) comprises a stiffening rim (3c) which extends in a longitudinal direction of the stringer (3).

10. Chassis according to Claim 9, **characterized in that** the stringer (3) comprises a first face (3a) and a second face (3b), and **in that** on the side of the first face (3a) the stiffening rim (3c) is in the form of a shoulder.

11. Chassis according to Claim 9, **characterized in that** the stringer (3) comprises a first face (3a) and a second face (3b), and **in that** on the side of the first face (3a) the stiffening rim (3c) is in the form of a concave portion.

12. Chassis according to any one of Claims 1 to 9, **characterized in that** the rigid support frame (1) is unitary.
